# EUROPEAN PATENT APPLICATION

(11) **EP 4 464 631 A1**
(43) Date of publication of application: **20.11.2024**
(21) Application number: 24175525.5
(22) Date of filing: 13.05.2024
(51) Int. Cl.: B65G 25/02, B65F 5/00

(54) **MACHINE FOR PUSHING LOOSE MATERIAL AND RELATED SYSTEM FOR TRANSPORTING**

(30) Priority: 16.05.2023 IT 202300009801
(71) Applicant: PickUp Macchine Srls, 24040 Bonate Sopra (IT)
(72) Inventor: TOCCHETTI, Paolo, 24040 BONATE SOPRA (IT)
(74) Representative: Tirloni, Bartolomeo

(57) **Abstract**

Machine (1) for pushing loose material (60), and related system (100) for transporting loose material (60), the machine (1) comprising a first blade (4) housed in a cavity (41) and a movement system (20) structured for moving the first blade (4) with a roto-translation cyclic movement, wherein, in a section of the cyclic movement, a pushing portion (4a) of the first blade (4) moves with a longitudinal component for pushing the loose material along the cavity in the direction from the feeding opening to the outlet opening, and where the cyclic movement comprises a rotation around a substantially transverse axis.

## Description

### Technical field of the invention

The present invention relates to a machine for mechanically pushing loose material, for example municipal solid waste or similar, and a relative system for transporting.

### State of the art

It is known transporting loose material, such as municipal solid waste or similar, by means of conveyor belts.

### Summary of the invention

By "loose material" it is meant a sliding mass (e.g. mutually unconstrained objects, except for occasional random joints or adhesions) of solid and heterogeneous objects (e.g. objects of various shapes, sizes and materials), such as municipal solid waste. Possibly the materials are mainly low specific density materials such as polymeric materials (also expanded), paper, cardboard, textile materials, etc., although there can also be present, typically in smaller quantities, heavier materials such as aluminum, glass, etc. The materials can be leaf shaped (or 2D, such as plastic films, textiles, paper sheets, etc.) or three-dimensional (or 3D, such as bottles, cans, trays, containers, etc.). The loose material can be at least partially deformable in, at least, partially elastic way (e.g. 3D polymeric materials) or substantially deformable in plastic way (e.g. compostable organic material).

By "substantially parallel/perpendicular", in relation to a pair of geometric elements (e.g. lines and/or planes), it is meant that one element forms with the other element an angle of 0°+/-15°, preferably of 0°+/-10°, or, respectively, 90°+/-15°, preferably 90°+/-10°.

The terms "front" and "rear" refer to the side (or portion) of the machine respectively proximal to, and distal to, the feeding opening.

The term "longitudinal" refers to the antero-posterior direction, i.e. the direction of the flow of material in the cavity of the machine. The term "transversal" refers to a direction perpendicular to the longitudinal direction.

By lateral view it is meant the view along the transversal direction.

By lateral sides it is meant the transversally opposite sides of the machine.

The terms "upstream", "downstream" and similar refer to the direction of transport of the flow of material.

The terms "horizontal", "vertical", "superior", "inferior", "summit", "bottom" and similar refer to the geographic vertical direction in a possible machine installation configuration where the longitudinal and transverse directions are arranged horizontally. In particular, the term "vertical" refers to the direction perpendicular to both the longitudinal and transverse directions (although in some installation configurations this direction may be arranged horizontally).

Any reference to geometric features of the cyclic movements of the blades refers to a side view of the machine.

The term "phase" of a cyclic movement of an organ refers to a parameter whose value uniquely defines a specific point of the movement. Conventionally, as the cyclic movement progresses the phase varies (even non-linearly with time) continuously in the range from 0° to 360° extremes included, the phase value resetting to zero at the beginning of the next cycle. Depending on the cyclic movement, the organ can be in a different spatial position at each phase value (e.g., organ which moves on a closed path not including intersecting or overlapping sections, for example a circular path), or in a same spatial position corresponding to two (or more) phase values (e.g. an organ which moves back and forth, for example a cursor which moves rectilinearly back and forth).

The Applicant has faced the problem of mechanically pushing a loose material with high yield in terms of material flow, and/or with limited costs (of initial investment and/or operational, including costs for energy consumption).

According to the Applicant, the aforementioned problem is solved by a machine in accordance with the attached claims and/or having one or more of the following features. According to an aspect, the invention relates to a machine for pushing loose material.

The machine comprises a cavity comprising a front feeding opening (for feeding the loose material) and a rear outlet opening (for the exiting of the loose material), said cavity having extension along a longitudinal direction from said feeding opening to said outlet opening. Preferably the machine comprises a pushing system structured for pushing the loose material along the cavity from the feeding opening to the outlet opening.

Preferably the machine (e.g. the pushing system) comprises a first blade housed in the cavity.

Preferably the machine (e.g. the pushing system) comprises a movement system structured for moving said first blade along a roto-translation cyclic movement.

Preferably, in a section of said cyclic movement, a pushing portion of said first blade moves with longitudinal component for pushing the loose material along the cavity with direction from the feeding opening to the outlet opening.

Preferably said cyclic movement comprises a rotation around a (substantially) transverse axis.

According to an aspect, the invention relates to a system for transporting loose material, the system comprising the machine according to the aforementioned aspect, in one or more of the present embodiments, and a pipe comprising an inlet mouth coupled with continuity to the outlet opening and an outlet mouth.

Preferably the pipe is (substantially) continuous and has (substantially) closed walls (e.g. a contour of a perpendicular section of the pipe is closed along an entire longitudinal development of the pipe) for conveying the flow of material pushed by the pushing system of the machine.

The expressions "continuous", "substantially closed" and "substantially open" are meant referred to the ability to convey a flow of loose material. For example, "substantially closed wall" does not exclude that the wall of the cavity or of the pipe has through openings necessary for the fixing of various elements and/or for the functioning of the various parts, such as discs or guides. For example, "continuous pipe" does not exclude that the pipe comprises a number of distinct sections of pipe mutually connected in succession with continuity.

According to an aspect, the invention relates to a method for transporting loose material. The method comprises:
- providing a pipe comprising an inlet mouth and an outlet mouth, wherein the pipe is substantially continuous and has substantially closed walls; and
- providing the machine according to the present invention, in one or more of its embodiments, coupling with continuity the outlet opening of the machine to said inlet mouth of the pipe and activating the movement system to move said first blade and mechanically push the loose material in said inlet mouth.

The Applicant has realized that the aforementioned roto-translational movement of the first blade allows the material to be pushed along the cavity with a longitudinal flow (continuous or intermittent). The rotation of the blade around a substantially transverse (instantaneous) axis allows the blade to be oriented in order to clutter the cross section of the cavity to a limited extent (e.g. by arranging the blade substantially longitudinally) for a portion of the cyclic movement, at which the blade can be moved towards the feeding opening interfering little or not at all with the material present in the cavity. In this way it is also possible to arrange more than one blade in a longitudinal series. On the contrary, in an alternative pushing system comprising a piston with purely longitudinal translational movement, the piston always occupies the cross section of the cavity, counteracting the flow of material in the return section.

Furthermore, the aforementioned roto-translational movement generates little or no sliding of the material on the blade, with consequent limitation of friction between material and blade, and little or no transversal movement of the material, with consequent limitation of friction between material (which essentially moves only longitudinally) and walls of the cavity.

On the contrary, an alternative screw pushing system, comprising a helical screw with a purely rotary movement around a longitudinal axis, involves a high sliding of the material on the screw, with related frictions, and generates a movement of the material having, in addition to a longitudinal component, also a high transversal (circumferential) component, with consequent transversal sliding on the walls of the cavity and related high friction to overcome.

Therefore, the present invention allows high yields in terms of material flow with reduced consumption, even in the mechanical simplicity of the machine.

The Applicant has discovered that a transport system (and method) which combines the present pushing machine with the aforementioned pipe, solves the problem of transporting the loose material along a transport path from an initial point to an end point, at the same height or at a different height, with limited costs (initial investment and/or operational) and/or with limited dimensions and/or with limited energy consumption, even in the face of a transport path that presents changes in direction.

In fact, the present transport system allows the transport even along tortuous routes, with both horizontal, vertical and oblique direction changes, keeping the overall dimensions and/or costs limited, thanks to the possibility of shaping the pipe as desired. On the contrary, a conventional conveyor belt can only cover linear sections and, in the event of a change of direction, it is necessary to arrange an additional conveyor belt and provide for a loss of height for the passage of the material between the two belts.

In case of a final height greater than the initial one, the transport system of the present invention allows the material to be transported along the pipe even with high inclinations, up to the vertical direction, which cannot be reached with conventional conveyor belts which normally do not exceed the maximum inclination of 35° (for avoiding the material rolling downstream). For example, for overcoming a height difference of approximately 8 m, a conveyor belt requires approximately 14 m in length for a horizontal encumbrance (in top view) of approximately 12 m, compared to a few meters of encumbrance in the plan of the pipe according to the present invention, when arranged vertically.

Furthermore, the aforementioned transport system reduces the repair and/or maintenance costs compared to a conveyor belt, as all the driving and pushing parts are concentrated in the pushing machine, unlike a conveyor belt which presents moving organs along the entire length.

Furthermore, the aforementioned transport system reduces energy consumption, and therefore the operating costs, compared to a conveyor belt, as it does not involve the frictions of the rollers and of the belt of the conveyor belt. Furthermore, the mechanical pushing elements involve low friction in their movement without material.

The aforementioned transport system is particularly suitable for upgrading operations of existing plants, replacing conveyor belts and freeing space for material treatment machines.

It is also possible to easily modify the transport path by intervening only and exclusively on the pipe without modifying the mechanical propulsion part. It also allows an easy reuse of the transport system by adapting it to new working and geometric conditions.

Finally, the material always remains inside the pipe, therefore protected from the weather and with reduced release of odors and dust.

The present invention may have one or more of the following preferred features.

Preferably said cavity has walls (belonging to said structure) substantially closed (with the exception of the supply and outlet openings), e.g. a contour of a perpendicular section of the cavity is closed along an entire longitudinal development of the cavity.

Preferably the machine comprises a structure which defines said cavity.

Preferably the machine (e.g. the pushing system) comprises a second blade housed in the cavity downstream of the first blade along the longitudinal direction.

Preferably the movement system is structured for moving said second blade with a respective roto-translation cyclic movement, wherein, in a section of said respective cyclic movement, a respective pushing portion of said second blade moves with longitudinal component for pushing the loose material along the cavity from the feeding opening to the outlet opening. The cyclic movement of the first blade, arranged in a position closest to the feeding opening, allows the loose material fed to the feeding opening to be taken and pushed towards the second blade, thanks to the movement section where the pushing portion moves with longitudinal component. Here the second blade takes the material left by the first blade and pushes it further towards the outlet opening, freeing space for new material brought by the first blade. In this way, a high pushing force of the material is obtained.

Preferably the machine (the pushing system) comprises two and only two blades, said two blades being said first and second blade.

Preferably said first and second blade are structurally equal to each other.

Preferably said respective cyclic movements of the first and second blade are equal to each other and, more preferably, develop at the same height.

Preferably said machine (and/or said pushing system and/or said movement system) has a plane of substantial symmetry (e.g. with the exception of some secondary elements) perpendicular to the transversal direction. In this way the machine is balanced.

Preferably said first blade and/or said second blade is substantially sheet-like (i.e. one dimension, the thickness, much smaller than the remaining two dimensions that define a main development plane) and more preferably substantially planar (e.g. the thickness can vary but within 10% of the other blade dimensions).

Preferably said first and/or second blade has a rectangular shape in a top view (i.e. perpendicular to the main development plane of the blade), wherein a first dimension is transversal and a second dimension is perpendicular to the first dimension (the second dimension being the visible dimension in lateral view, i.e. along the transverse direction). In this way, a desired transport efficiency is achieved.

Preferably, said pushing portion of said first and/or second blade comprises at least a respective lower portion of said first and/or, respectively, second blade, comprising a respective lower end edge. In this way, the yield is improved at least when the machine is installed horizontally.

Preferably the cyclic movements of the first and second blades are mutually synchronized. In this way, possible accumulations of material in the cavity are limited.

Preferably said cyclic movement of the second blade has a phase delay with respect to the cyclic movement of the first blade. Thanks to the phase delay, for at least a portion of an inactive portion of the movement of the first blade, in which the first blade does not push the material and returns to the material gripping position, the second blade exerts a push, and vice versa. In this way, it is limited the possible retrograde movement of the material, which when left free tends to return towards the feeding opening, for example when it is in a compressed state downstream of the second blade (e.g. elastically deformable material such as plastics etc.).

Preferably said phase delay (assuming as zero phase the same point for both cyclic movements, for example the position of least inclination) is greater than or equal to 90°, more preferably greater than or equal to 120°, even more preferably greater than or equal to 150°, and/or less than or equal to 270°, more preferably less than or equal to 240°, even more preferably less than or equal to 210°. In this way the two blades keep the material pushed towards the outlet opening.

Preferably said cyclic movement of the first and/or second blade comprises a rotation only around said substantially transverse axis. In other words, the blades never rotate around longitudinal or vertical axes, but only around a transversal (instantaneous) axis, with consequent simplification of the machine.

Preferably said cyclic movement of the first and/or second blade does not have transversal translation components. In this way the transversal encumbrance of the machine is limited.

Preferably said portion of said cyclic movement of the first and/or second blade is an antero-inferior section of the respective cyclic movement. In this way, a high yield is obtained, at least when the machine is installed horizontally.

Preferably said first and/or second blade (e.g. said respective pushing portion of the first and/or second blade) approaches longitudinally said feeding opening in an upper portion of the respective cyclic movement and/or moves away longitudinally from said feeding opening in a lower portion of the respective cyclic movement. In this way the blade interferes little with the material while it is brought back towards the feeding opening, and it has maximum interference with the material during the transport action.

Preferably said first and/or second blade takes a position of minimum inclination with respect to a horizontal plane (the inclination being defined by an angle formed by the blade, in lateral view, with the longitudinal direction and facing supero-posteriorly) in an upper portion (more preferably at a summit point) of the respective cyclic movement and/or a position of maximum inclination in a lower portion (more preferably at a bottom point) of the respective cyclic movement. In this way, interference with the material in the upper portion is minimized, while at the same time reducing the overall dimensions of the machine, and interference in the lower portion, where the transport action is carried out, is maximized.

Preferably an angle formed by the first and/or second blade, in lateral view, with the longitudinal direction and facing superior-posteriorly, in the position of maximum inclination is greater than or equal to 40° (for an effective transport action) and/or less than 90°, more preferably less than or equal to 80°, even more preferably less than or equal to 70° (in other words the blade always remains inclined during interaction with the material, in lateral view, in a direction from antero-inferior to rear-superior, in order to prevent the material from rising along the blade upwards, with the risk of the material getting caught in particular in the sliding guides of the rear fulcrums).

Preferably an acute angle formed by the first and/or second blade, in lateral view, with the longitudinal direction (above or below the longitudinal direction) and facing posteriorly, in the position of minimum inclination is less than or equal to 20°, more preferably less than or equal to 10° (thus the blade remains almost parallel to the upper wall of the cavity, with minimal occupation of the cavity section).

Preferably said first and/or said second blade has a respective front fulcrum (or pair of mutually facing fulcrums) and a respective rear fulcrum (or pair of mutually facing fulcrums) (e.g. each blade includes a respective transversal bar for each fulcrum or pair of mutually facing fulcrums), wherein during said cyclic movement said front fulcrum travels, in lateral view, a first closed trajectory and said rear fulcrum travels a second trajectory. In this way the roto-translational movement of the blades is achieved in a simple way.

Preferably said first fulcrum and/or said second fulcrum pass through the respective blade (i.e. they are incident to the respective blade), more preferably it/they is/are positioned inside said cavity. In this way, the space required for the movement of the blade is reduced and therefore the overall size of the machine is reduced, while maintaining high transport efficiency.

Preferably said first closed trajectory is a circle. Preferably said movement system comprises, for each of said first and/or second blade, a respective disc, more preferably a respective pair of discs arranged on transversely opposite sides of the respective blade and mutually facing, said disc being rotating around a transversal axis (fixed), said front fulcrum being integral with said disc (more preferably with said pair of discs) in an eccentric position with respect to the axis of rotation of the disc, for being moved along said circle. In this way, the movement of the front fulcrum is achieved simply by acting on it, while the rear fulcrum is dragged.

Preferably said movement system comprises a motor (e.g. electric) and a transmission system which mechanically connects the motor to the first blade (and preferably to the second blade) for activating the first blade (and preferably the second blade). Preferably said motor and/or said transmission system is/are housed outside of said cavity (so as not to interfere with the material), the motor being more preferably placed in a rear and upper position of said structure. Preferably said transmission system comprises one or more pinions of the motor (e.g. one pinion for each side), one or more respective toothed wheels integral with each disc and a system of chains (and/or belts) which connect said one or more pinions of the motor with the respective toothed wheels for rotating said discs. In this way the movement system is mechanically simple and reliable.

Preferably said second trajectory is linear, more preferably rectilinear, even more preferably forming with the longitudinal direction, in lateral view, an acute angle (above or below the longitudinal direction) and facing posteriorly, less than or equal to 20°, more preferably less than or equal to 10°. Preferably, said movement system comprises, for each rear fulcrum (and preferably for each side of the machine), a respective rectilinear guide (e.g. obtained on the side walls of the structure) slidably engaged by the respective rear fulcrum during the motion along the second trajectory.

In one alternative embodiment, the second trajectory is closed (curvilinear).

Preferably said first and/or second blade in said section of the respective cyclic movement (e.g. at least in the position of maximum inclination) has a projection onto a section of the cavity perpendicular to the longitudinal direction which occupies a prevalent portion of said section, for example at least the 80%, more preferably at least 90%. In this way it is possible to exert a push on the material towards the outlet opening (a push that a conveyor belt is not able to exert).

Preferably the pipe has a square or rectangular section (for facilitating the installation on the ground). Preferably the pipe has a circular section (for facilitating the changes in direction).

Preferably, said loose material is municipal solid waste with low specific density.

### Brief description of the figures

figure 1 shows schematically and in perspective view a machine according to the present invention;
figure 2 shows a perspective view of the machine of figure 1, with some parts removed;
figure 3 shows a perspective view, partial and partially exploded, of the machine of figure 1;
figure 4 shows schematically and in perspective view a system for transporting loose material according to the present invention;
figure 5 shows schematically and in perspective view a system comprising two transport systems according to the present invention;
figures 6-10 show, in a side view and in a purely schematic way, some phases of the operating cycle of the machine.

### Detailed description of some embodiments of the invention

The features and advantages of the present invention will be further clarified by the following detailed description of some embodiments, presented by way of example and not as a limitation of the present invention, with reference to the attached figures.

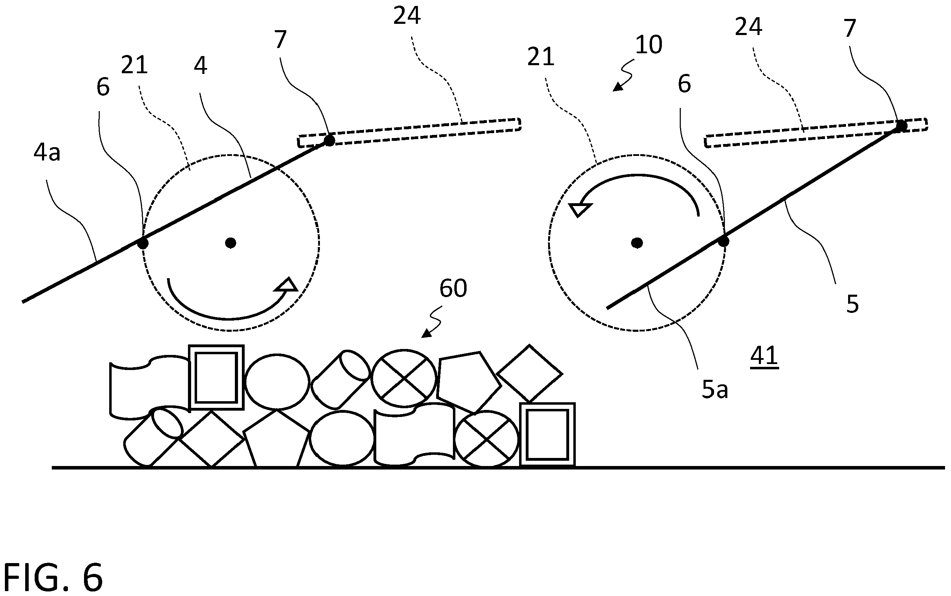

In the figures with the number 1 it is indicated a machine for pushing loose material 60 (shown only schematically in figures 6-10).

The machine conventionally develops along a longitudinal direction 50 (parallel to the direction of the material flow), a transversal direction 51 and a vertical direction 52. Exemplarily the longitudinal length is about 265 cm, the transversal width is about 87 cm and the height is about 93 cm, for a total weight of the machine of about 800 kg.

The machine comprises a structure 40 which defines a cavity 41 comprising a front feeding opening 2 for feeding the loose material and a rear outlet opening 3 for the exit of the loose material. Preferably the cavity has substantially closed walls (e.g. the contour of the perpendicular section of the cavity is closed along the entire longitudinal development of the cavity), with the exception of the feeding and outlet openings and through openings, such as the guides for the rear fulcrums, in a position and/or of such dimensions as to interfere with the flow of material in a negligible way.

The machine comprises a pushing system 10 structured for pushing the loose material along the cavity from the feeding opening to the outlet opening.

Preferably the pushing system comprises, housed inside the cavity 41, a first blade 4, in a proximal position to the feeding opening 2, and, downstream of the first blade along the longitudinal direction, a second blade 5.

Preferably the pushing system 10 comprises a movement system 20 structured for moving the first 4 and second blade 5 with a respective mutually synchronized cyclic movement and with a phase delay. Exemplarily, the phase delay of the cyclic movement of the second blade compared to the cyclic movement of the first blade is equal to 180°. In the example shown, the pushing system comprises two and only two blades 4 and 5. In alternative embodiments, not shown, the pushing system can comprise a single blade, e.g. the second blade 5 (and not the first blade 4, or vice versa), or a third blade (and possibly a fourth blade with similar features and so on), arranged in a longitudinal series downstream of the second blade, structurally identical to the first and second blade 4, 5 and having a respective cyclic movement mutually synchronized with the movements of the first and second blade and with a phase delay with respect to the second blade. In this case the phase delay of the second and third blades with respect to the respective blade immediately upstream is exemplarily equal to 120°.

Preferably the first and second blades are structurally equal to each other and the respective cyclic movements are equal to each other and develop at the same height.

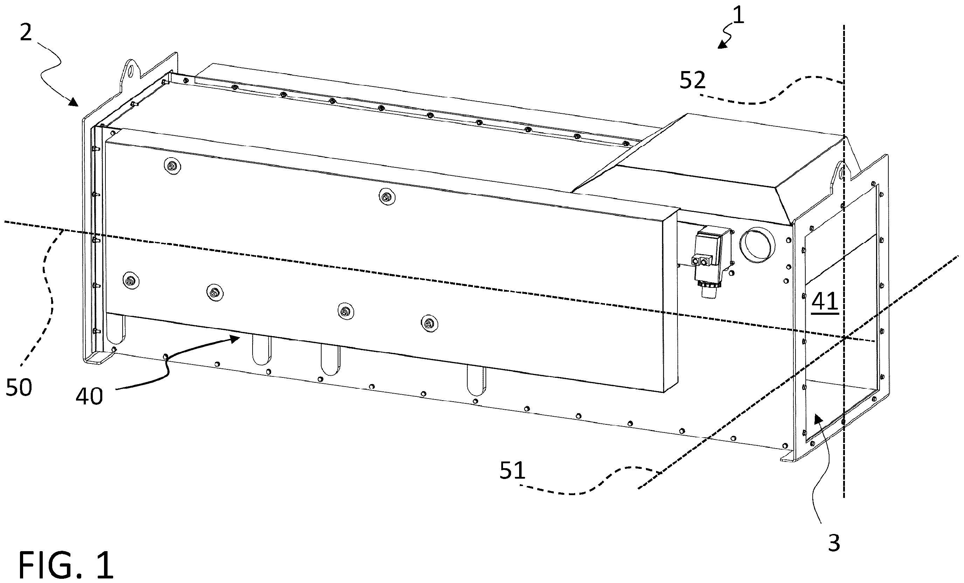

Preferably the machine has a plane of substantial symmetry (e.g. with the exception of some secondary elements) perpendicular to the transversal direction (e.g. in figure 1 the plane passing through lines 50 and 52).

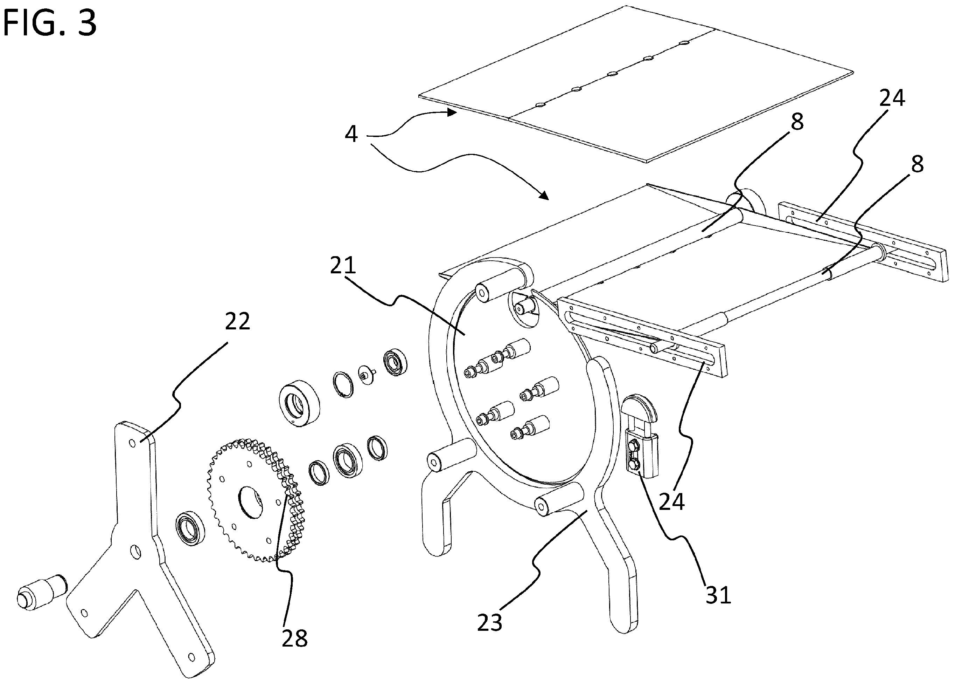

Preferably each of the first 4 and second blade 5 is substantially sheet-like and substantially planar. In the example shown, each blade is made from the union of two sheets (fig. 3) that are substantially planar and substantially mutually parallel, where each blade in lateral view has an overall shape that tapers moving from the center towards both ends, with a thickness which always remains approximately at least one order of magnitude smaller than the remaining two dimensions that define a main development plane of the blade.

Preferably the first and second blade (and the two respective aforementioned sheets) in top view (i.e. perpendicular to the main development plane of the blade) have a rectangular shape, where a first dimension is always maintained transverse and a second dimension is perpendicular to the first dimension (the second dimension being the dimension visible in lateral view, i.e. along the transverse direction).

Preferably the first 4 and the second blade 5 have a respective front fulcrum 6 and a respective rear fulcrum 7 (each fulcrum is realized by a pair of transversely facing fulcrums, one for each side of the machine). For example, each blade comprises a respective transversal bar 8 for each fulcrum.

Preferably the movement system 20 comprises, for each of the first and second blades, a respective pair of discs 21 arranged on transversely opposite sides of the respective blade and mutually facing, the discs being rotating around a fixed transverse axis. Exemplarily, the discs are flush with the vertical walls of the cavity 41 and are supported by a respective metal cage (made from the shaped bodies 22 and 23) rigidly fixed to the structure. The bar 8 of the front fulcrum 6 is rotationally fixed (e.g. by a ball bearing coupling), at its transverse ends, to the pair of discs 21 in an almost circumferential position. In this way, during the cyclic movement of the blade, the front fulcrum 6 travels, in lateral view, a first circular trajectory.

Preferably, for each rear fulcrum 7, the movement system 20 comprises a respective pair of rectilinear guides 24 (e.g. obtained on the side walls of the structure), one for each side of the machine and mutually facing. The transversely opposite ends of the bar 8 of each rear fulcrum 7 slidably engage the respective pair of rectilinear guides 24. In this way, during the cyclic movement of the blade, the rear fulcrum 7 travels, in lateral view, a second rectilinear trajectory. Exemplary, each guide 24, in lateral view, forms with the longitudinal direction (above the longitudinal direction, as shown in the figures, or below the longitudinal direction, not shown) an acute angle facing rearwards equal to 5°.

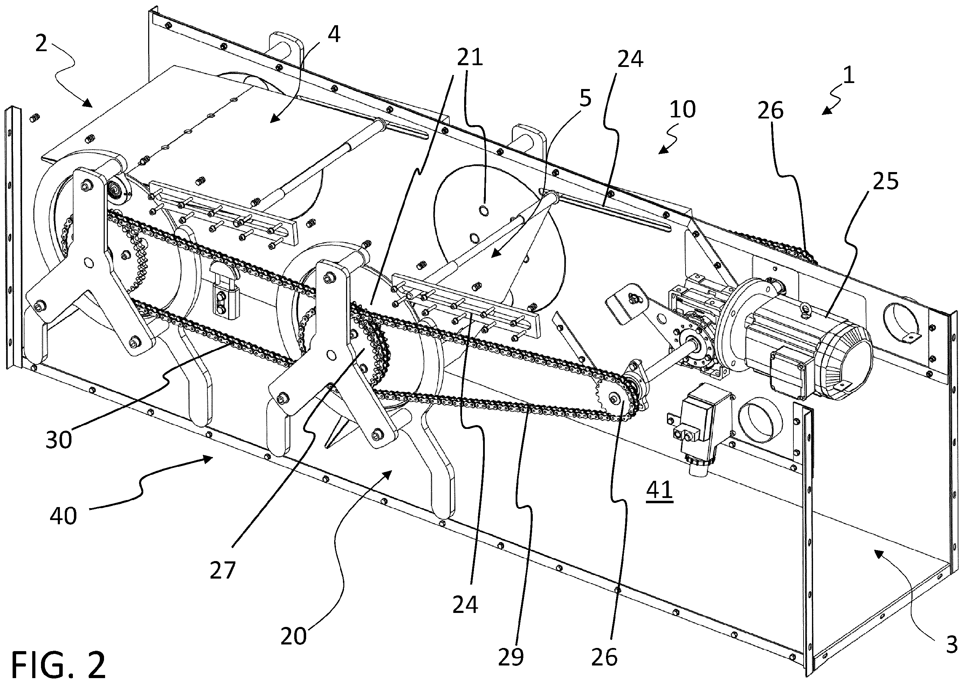

Preferably the movement system 20 comprises, externally to the cavity 41, an electric motor 25 and a transmission system which mechanically connects the motor 25 to the first 4 and second blade 5. Preferably the motor 25 is housed in a dedicated closed compartment (visible only partially in figure 2), in the rear and upper position of the structure 40. Preferably the transmission system comprises a pinion 26 for each side, a pair of toothed wheels 27 integral with each disc 21 of the second blade 5 (coaxial to the rotation axis of the disk), a toothed wheel 28 integral with each disc 21 of the first blade 4 (coaxial to the rotation axis of the disk), a first chain 29 (or belt) which connects each pinion 26 with a first toothed wheel of the respective pair of toothed wheels 27 and a second chain 30 which connects a second toothed wheel of the respective pair of toothed wheels 27 with the toothed wheel 28. Exemplary, the toothed wheels 27, 28 are rotatably supported (e.g. by a system of ball bearings) from the respective metal cage composed of the bodies 22 and 23, and in turn support the respective discs 21. A tensioner 31 can be associated with one or both chains 29, 30 on each side.

In one alternative embodiment, not shown, the movement of the front fulcrum can be obtained (instead of through the discs 21) by constraining the front fulcrum (e.g. the transverse ends of the respective bar 8) directly to a respective chain for each side, this respective chain being guided by appropriate return rollers and/or sliding guides and being driven by the motor by an appropriate transmission system.

In one further alternative embodiment, not shown, the transversely opposite ends of the bar 8 of each front fulcrum slidably engage a respective pair of mutually facing and transversally opposed guides, e.g. obtained on the side walls of the structure, wherein each guide has a closed development. In this case, the driving of the blade can be obtained by acting on the rear fulcrum (instead of the front one) by, for example, a linear actuator.

In the two aforementioned alternative embodiments, it is also possible to realize non-circular trajectories of the front fulcrum.

In the example shown, the cyclic movements of the first and second blades are mutually synchronized, and the cyclic movement of the second blade 5 has a phase delay of 180° compared to the cyclic movement of the first blade 4.

The present invention also contemplates embodiments, not shown, in which the cyclic movements of the two blades are not synchronized, or are synchronized and in phase. Such embodiments can, for example, be suitable for pushing or transporting loose plastically deformable material, in which the elastic return force is low or zero, such as for example compostable organic material.

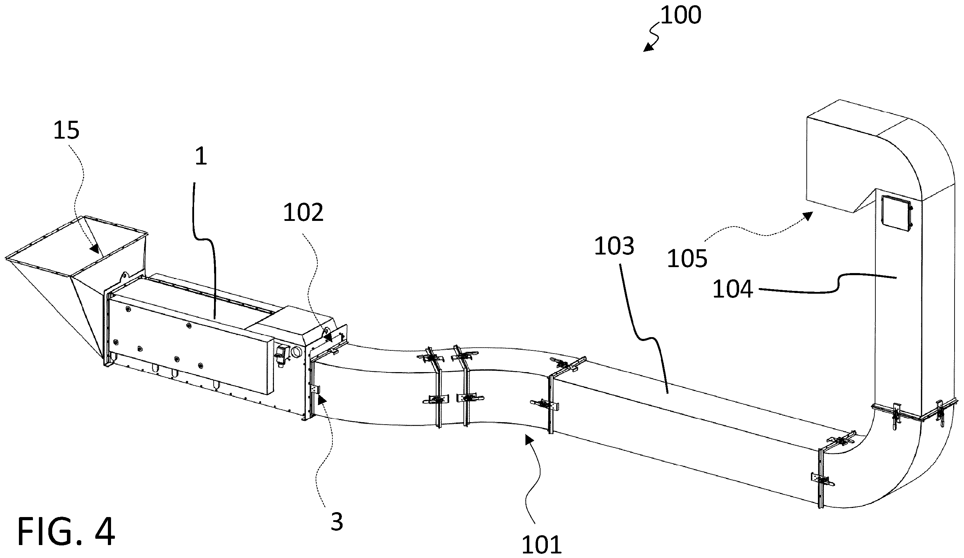

Figure 4 shows a system 100 for transporting loose material according to the present invention.

Preferably the system 100 comprises the machine 1 for pushing loose material, and a pipe 101 comprising an inlet mouth 102 (not visible in figure 4), coupled with continuity to the outlet opening 3 (not visible in figure 4), and an outlet mouth 105. Preferably the pipe is continuous and has substantially closed walls. Exemplarily the pipe has a square section.

Preferably the pipe 101 is realized by distinct sections of pipe connected together in succession with continuity. Exemplary in figure 4 a straight horizontal section 103, a straight vertical section 104 and some further curvilinear connecting sections are shown. Preferably the machine 1 comprises a hopper 15 at the feeding opening for facilitating the feeding of the material.

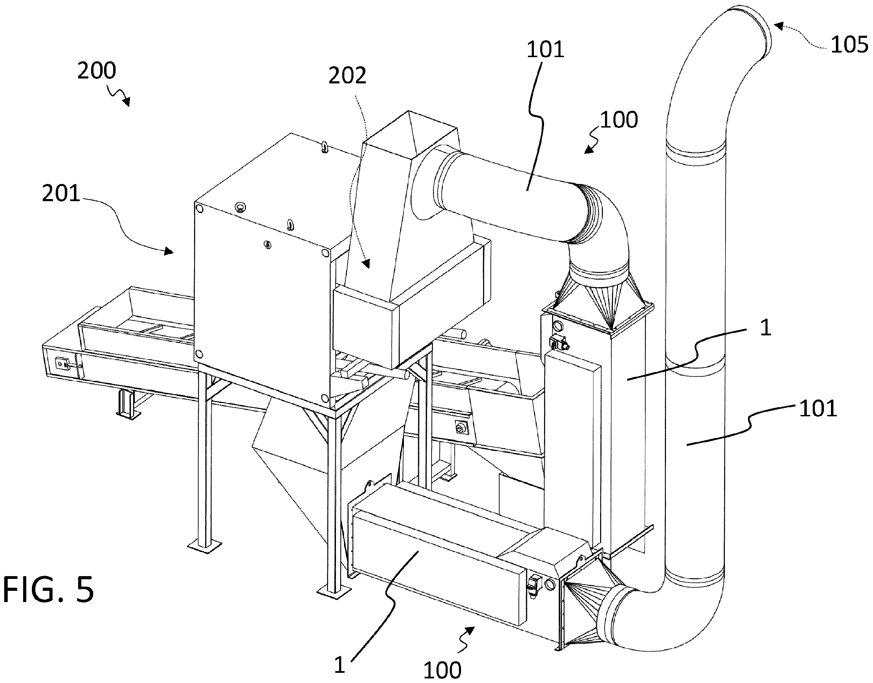

Figure 5 shows a plant 200 comprising a machine 201 for separating a flow of loose material entering a respective feeding opening 202 into two sub-flows of loose material, mainly of two different types (e.g. 2D and 3D), as for example described in EP2982447A1. The plant 200 exemplary comprises two systems 100 for transporting loose material, wherein the pipe 101 has a circular section: a first system 100, comprising the machine 1 arranged horizontally, for transporting one of the two sub-flows exiting the separating machine 201 at a higher vertical height, and a second system 100, comprising the machine 1 arranged vertically (i.e. with the longitudinal direction arranged according to the geographical vertical), for transporting the flow of material from a conveyor belt up to the feeding opening 202 of the separating machine 201, located at a higher altitude.

Figures 4 and 5 show the versatility and adaptability of the transport system 100 according to the present invention, in the face of reduced dimensions and construction simplicity.

In the following, it is described an example of functioning of the machine 1, as schematically shown in figures 6-10, where the machine 1 is arranged horizontally (i.e. with the longitudinal direction 50 horizontal) and the blades 4, 5 are schematically illustrated in lateral view by straight segments. It is assumed as zero phase (0°) of each blade the position of minimum inclination with respect to the horizontal, assumed in the summit position of the cyclic movement of the blade (i.e. the summit position of the front fulcrum 6). The phase is conventionally equal to the degrees of rotation of the respective disks 21 with respect to the phase 0°.

Exemplary, the loose material, both dry and wet, is composed of objects in polymeric materials, 95% 2D and 5% 3D, of dimensions between about 5 and 100 cm. The power of the motor is equal to 0.75 kW single phase.

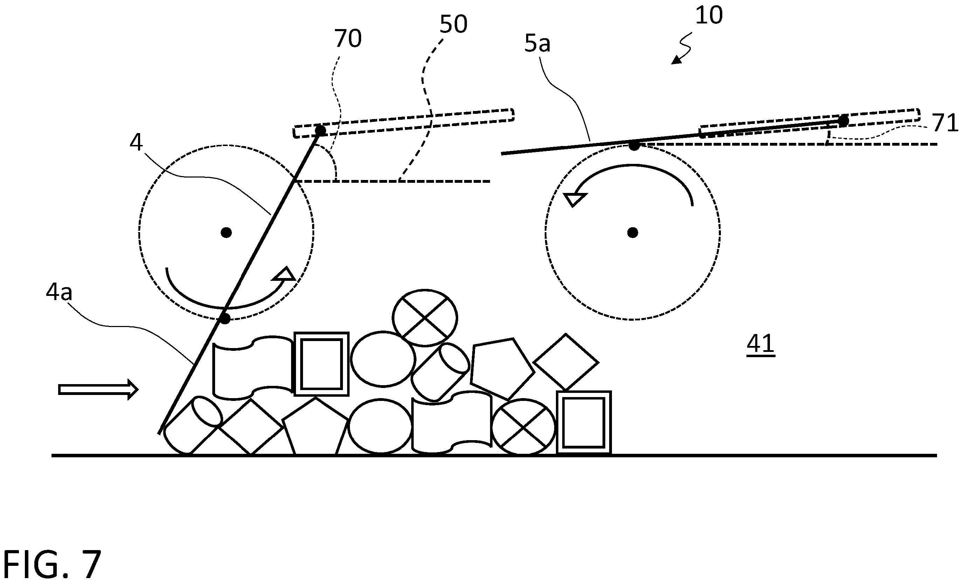

In figure 6, the loose material 60 (shown only partially and illustratively) occupies the lower part of the cavity 41, for example as it was previously pushed by the blades into this position. The phase of the first blade 4 is 90° and the phase of the second blade 5 is 270°. Figure 7 shows a following phase, where thanks to the rotation of the disks 21 (anticlockwise in the figures), the phase of the blades has advanced by 90°. In this configuration, the first blade 4 assumes the position of maximum inclination at a bottom point of the respective cyclic movement. The angle 70 formed by the blade, in lateral view, with the longitudinal direction 50 and facing superior-posteriorly, in this position of maximum inclination, is exemplary equal to 60°. The second blade 5 assumes the minimum inclination position (0° phase) at summit top point of the respective cyclic movement. The acute angle 71 formed by the blade, in lateral view, with the longitudinal direction and facing rearward, in this position of minimum inclination is exemplary equal to 7°. It is observed that in the figure this acute angle 71 is positioned above the direction 50; however, it can also be located lower than the direction 50 (in this case the blade 4, 5 in the position of minimum inclination assumes a 'negative' inclination).

In the antero-inferior section of the cyclic movement of the first blade 4, e.g. the 90° portion of phase variation that goes from the phase of figure 6 to that of figure 7, the pushing portion 4a of the first blade 4, e.g. at least the lower portion of the blade which comprises the lower end edge, moves (in the example with roto-translational motion) with a longitudinal component in order to push the loose material along the cavity in the direction from the feeding opening to the outlet opening.

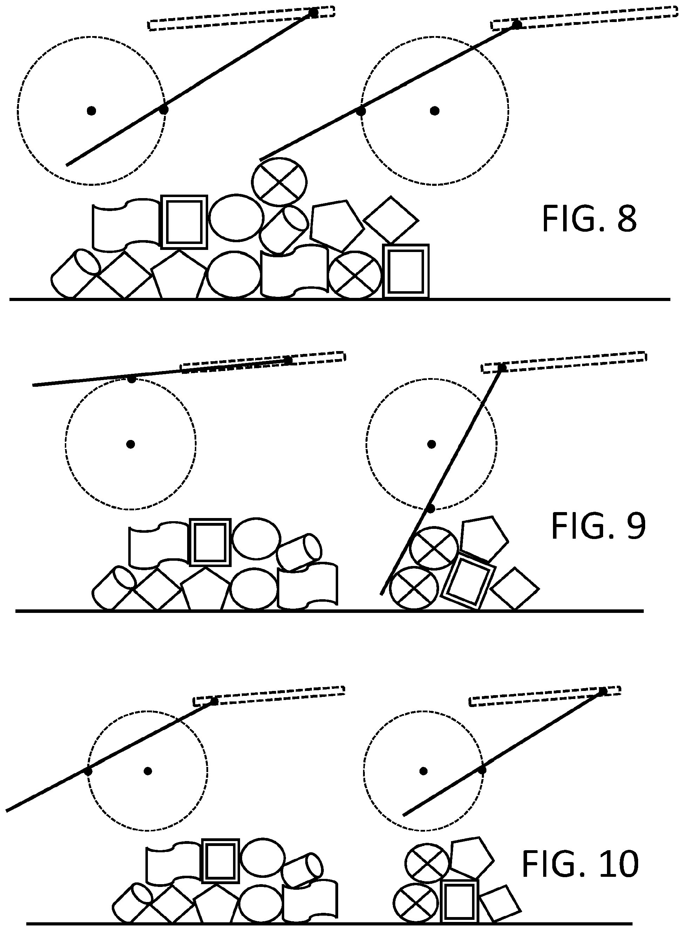

Figure 8 shows a further subsequent phase, where the phase of the blades has advanced a further 90° compared to figure 7. This configuration is similar to the one of figure 6, but in phase opposition. It is observed that in the upper portion of the cyclic movement of the second blade 5 equal to 180° of phase variation, which goes from the phase of figure 6 to that of figure 8, the second blade 5, or at least its pushing portion 5a, approaches longitudinally to the feeding opening 2, while at the same time the first blade 4, or at least its pushing portion 4a, moves away longitudinally from the feeding opening 2 in the lower portion of the cyclic movement of the first blade 4 equal to 180° of variation phase.

Figure 9 shows a further subsequent phase, where the blade phase has advanced a further 90° compared to figure 8. This configuration is similar to the one of figure 7, but in phase opposition, and is also shown in figure 2. In this configuration, the second blade 5 assumes the position of maximum inclination at a bottom point of the respective cyclic movement. Preferably in this position of maximum inclination the first and second blades have a projection onto a section of the cavity perpendicular to the longitudinal direction which occupies at least 90% of this section (see also figure 2). In the anterior-inferior section of the cyclic movement of the second blade 5 which goes from the phase of figure 8 to that of figure 9, the pushing portion 5a of the second blade 5 moves with a roto-translation movement with a longitudinal component to push in turn the loose material along the cavity with direction from the feeding opening to the outlet opening.

Finally, figure 10 shows a further subsequent phase, where the blade phase has advanced by a further 90° compared to figure 9 to return to the same configuration as that of figure 6.

It is observed how the pushing with at least two blades out of phase with each other reduces the time in which the material (at least that which is found on the bottom of the cavity 41) is potentially free to move retrogradely towards the feeding opening (e.g. as in the configurations of figures 6, 8 and 10), for example pushed by the elastic expansion force generated by the material in the compressed state downstream of the second blade 5, e.g. in pipe 101.

The pushing action of the blades pushes the material towards the outlet opening 3 and from here into the pipe 101, where the material pushed last in turn pushes forward the material already present in the pipe creating a flow of material, continuous or intermittent, along the pipe, until the material continuously fills the pipe along its entire length, causing the material first pushed into the pipe to exit from the outlet 105.

It is observed that the machine 1 for pushing loose material can be used, in addition to the transport system 100, also for compacting the material inside a container.

## Claims

1. A machine (1) for pushing loose material (60), the machine comprising:
- a cavity (41) comprising a front feeding opening (2) and a rear outlet opening (3), said cavity having extension along a longitudinal direction (50) from said feeding opening (2) to said outlet opening (3);
- a first blade (4) housed in the cavity (41); and
- a movement system (20) structured for moving said first blade (4) along a roto-translation cyclic movement,
wherein, in a section of said cyclic movement, a pushing portion (4a) of said first blade (4) moves with longitudinal component for pushing the loose material along the cavity with direction from the feeding opening to the outlet opening,
and wherein said cyclic movement comprises a rotation around a substantially transverse axis.

2. Machine (1) according to claim 1, wherein said first blade (4) is substantially sheet-like and substantially planar, wherein said first blade (4) has rectangular shape in a top view, wherein a first dimension is transversal and a second dimension is perpendicular to the first dimension, wherein said pushing portion (4a) of said first blade (4) comprises at least a lower portion of said first blade, comprising a lower end edge, and wherein said cavity (41) has substantially closed walls.

3. Machine (1) according to any one of the previous claims, wherein said section of said cyclic movement is an antero-inferior section of the cyclic movement, wherein said pushing portion (4a) of the first blade (4) approaches longitudinally said feeding opening (2) in an upper portion of the respective cyclic movement and/or moves away longitudinally from said feeding opening (2) in a lower portion of the cyclic movement, wherein said first blade (4) takes a position of minimum inclination with respect to a horizontal plane in an upper portion of the cyclic movement and/or a position of maximum inclination in a lower portion of the cyclic movement, wherein an angle (70) formed by the blade, in lateral view, with the longitudinal direction (50) and facing superior-posteriorly, in the position of maximum inclination is greater than or equal to 40° and/or less than 90° and wherein an acute angle (71) formed by the first blade, in lateral view, with the longitudinal direction (50) and facing posteriorly, in the minimum inclination position is less than or equal to 20°.

4. Machine (1) according to any one of the previous claims, wherein said first blade (4) has a front fulcrum (6) and a rear fulcrum (7), wherein during said cyclic movement said front fulcrum (6) travels, in lateral view, a first closed trajectory and said rear fulcrum (7) travels a second trajectory.

5. Machine (1) according to claim 4, wherein said first blade comprises a transversal bar (8) for each fulcrum, wherein said first closed trajectory is a circle, wherein said movement system (20) comprises a pair of discs (21) arranged on transversely opposite sides of the first blade (4) and mutually facing, said discs being rotating around a fixed transversal axis, said front fulcrum (6) being integral with said pair of discs (21) in eccentric position with respect to the axis of rotation of the discs (21), for being moved along said circle, wherein said movement system (20) comprises a motor (25) and a transmission system which mechanically connects the motor to the first blade to activate the first blade, wherein said motor and/or said transmission system is/are housed outside said cavity, the motor being placed in rear and upper position of a structure, wherein said transmission system comprises one or more pinions (26) of the motor, one or more respective toothed wheels (28) integral with each disc and a system of chains and/or belts which connect said one or more pinions of the motor with the respective toothed wheels for rotating said discs, wherein said second trajectory is rectilinear and forms with the longitudinal direction (50), in lateral view, an acute angle, facing posteriorly, less than or equal to 20°, wherein said movement system (20) comprises, for each rear fulcrum (7) and for each side of the machine, a respective rectilinear guide (24) slidingly engaged by the respective rear fulcrum (7) during the motion along the second trajectory.

6. Machine (1) according to any one of the previous claims, comprising, downstream of the first blade (4) along the longitudinal direction (50), a second blade (5), the movement system (20) being structured to move said second blade (5) with a respective roto-translation cyclic movement, wherein, in a respective section of said respective cyclic movement, a respective pushing portion (5a) of said second blade moves with longitudinal component for pushing the loose material along the cavity (41) with direction from the feeding opening to the outlet opening.

7. Machine according to claim 6, comprising two and only two blades, said two blades being said first (4) and second blade (5), wherein said first (4) and second blade (5) are structurally equal to each other, wherein said cyclic movements of the first and second blade are equal to each other and develop at the same height and wherein said machine (1) has a plane of substantial symmetry perpendicular to the transversal direction.

8. Machine (1) according to claim 6 or 7, wherein the cyclic movements of the first (4) and second blade (5) are mutually synchronized and wherein said cyclic movement of the second blade (5) has a phase delay with respect to the cyclic movement of the first blade, said phase delay being greater than or equal to 90°, and/or less than or equal to 270°.

9. A system (100) for transporting loose material (60), the system comprising:
- the machine (1) according to any one of the previous claims and
- a pipe (101) comprising an inlet mouth (102) coupled with continuity to the outlet opening (3) and an outlet mouth (105), wherein the pipe is substantially continuous and has substantially closed walls.

10. A method for transporting loose material (60), the method comprising:
- providing a pipe (101) comprising an inlet mouth (102) and an outlet mouth (105), wherein the pipe is substantially continuous and has substantially closed walls; and
- providing the machine (1) according to any one of claims from 1 to 8,
- coupling with continuity the outlet opening (3) of the machine to said inlet mouth (102) of the pipe and
- activating the movement system to move said first blade (4) and mechanically push the loose material into said inlet mouth.
